# EUROPÄISCHE PATENTSCHRIFT

(11) **EP 2 236 346 B1**
(45) Veröffentlichungstag und Bekanntmachung des Hinweises auf die Patenterteilung: **05.03.2014**
(21) Anmeldenummer: 10157891.2
(22) Anmeldetag: 26.03.2010
(51) Int. Cl.: B60N 2/00, B60R 21/015

(54) **Erkennungseinrichtung und Verfahren zum Erkennen einer Belegung eines Sitzes**
Recognition device and method for recognising the occupation of a seat
Dispositif de reconnaissance et procédé de reconnaissance de l'occupation d'un siège

(30) Priorität: 02.04.2009 DE 102009015998; 25.03.2010 DE 102010012853
(43) Veröffentlichungstag der Anmeldung: 06.10.2010
(73) Patentinhaber: GRAMMER AG, 92224 Amberg (DE)
(72) Erfinder: Kolb, Jens, 92281 Königstein (DE); Übelacker, Roland, 92536 Pfreimd (DE); Müller, Stefan, 92289 Ursensollen (DE); Meier, Jürgen, 90411 Nürnberg (DE)
(74) Vertreter: Hannke, Christian

(56) Entgegenhaltungen:
- EP-A1- 1 744 135
- DE-A1- 19 752 976
- US-A- 4 294 513
- US-A1- 2009 143 943

## Beschreibung

Die Erfindung betrifft eine Erkennungseinrichtung und ein Verfahren zum Erkennen einer Belegung eines Sitzes, insbesondere eines Fahrzeugsitzes oder eines Kraftfahrzeugsitzes, zumindest einen länglich ausgebildeten Lichtleiter umfassend, welcher zumindest ein länglich ausgebildetes Kernelement und zumindest eine zum Kernelement beabstandete länglich ausgebildete Hülle aufweist, wobei der Lichtleiter durch mechanische Betätigungsmittel in zumindest einer senkrecht zur Längsachse des Lichtleiters verlaufenden Richtung deformierbar ist, indem die durch die Sitzbelegung verursachte Deformierung an der dem mechanischen Mittel gegenüberliegenden Seite einen Austritt des Lichtes aus dem Lichtleiter bedingt.

Gattungsgemäße Sitze werden insbesondere im Kraftfahrzeugwesen oftmals bereits serienmäßig eingesetzt, um betriebssicher zu erkennen, ob eine Person auf dem Sitz Platz genommen hat, um beispielsweise Funktionen von Airbags optimal steuern zu können.

Die Druckschrift DE 197 529 76 A1 zeigt beispielsweise einen Sitz, in den ein druckempfindlicher Schalter (PSS) eingebaut ist, der in der Form einer flexiblen Folie vorgesehen ist und zwischen dem Sitzpolster und dem federnden Abschluss gehalten wird; die weitere Druckschrift EP 1 744 135 A1 zeigt einen folienartig aufgebauten Drucksensor umfassend flexible Folien, zwischen denen Lichtleiter angeordnet sind, wobei die Folien vorzugsweise strahlungsabsorbierend ausgebildet sind, wobei die durch die Sitzbelegung verursachte Krümmung der oberen Folie ein Austritt des Lichtes aus dem Lichttester bedingt.

Es ist Aufgabe der Erfindung eine Erkennungseinrichtung und ein Verfahren zum Erkennen einer Sitzbelegung eines Fahrzeugsitzes weiterzuentwickeln.

Die Aufgabe der Erfindung wird mit einer Einrichtung laut Anspruch 1 und einem Verfahren laut Anspruch 11 zum Erkennen einer Belegung des Sitzes gelöst, bei welchem mittels der Erkennungseinrichtung erkannt werden kann, ob eine Person auf dem Sitzteil Platz genommen hat, wobei die Erkennungseinrichtung am Sitzteil Mittel zum optischen Erkennen einer personenbezogenen Sitzbelegung, wie einen Lichtleiter, umfasst.

Dadurch, dass zumindest ein Lichtleiter unmittelbar am Sitzteil vorgesehen ist, ist stets ein besonders betriebssicheres Erkennen einer Sitzbelegung gewährleistet, sodass die Gefahr von Fehlfunktionen wesentlich verringert werden kann. Ein zuverlässiges Erkennen der Sitzbelegung kann unter Umständen sogar lebenswichtig sein, wenn von einer eindeutigen und zuverlässigen Erkennung der Sitzbelegung eine Steuerung bzw. Regelung von sicherheitsrelevanten Einrichtungen abhängt.

Der Begriff "Sitz" erfasst hierbei jegliche Sitzvorrichtungen, auf welchen Personen Platz nehmen können. Beispielsweise kann ein derartiger Sitz auch in einem Flugzeug zum Einsatz kommen. Bevorzugt wird der vorliegende Sitz jedoch in Gestalt eines Fahrzeugsitzes oder eines Kraftfahrzeugsitzes in Landfahrzeugen eingesetzt. Der Sitz verfügt zudem immer über ein Sitzteil, auf welchem eine Person unmittelbar Platz nehmen kann. Vorzugsweise umfasst der Sitz des Weiteren eine Rückenlehne, an welche sich die Person anlehnen kann, sodass sie sicher von dem Sitz aufgenommen wird.

Es versteht sich, dass die Mittel zum optischen Erkennen neben dem Lichtleiter, der in vielfältiger Gestalt am Sitzteil des Sitzes realisiert sein kann, u.a. auch Sende - und Empfangseinrichtung umfasst.

Mittels des deformierbaren Lichtleiters können die optischen Eigenschaften baulich auf besonders einfache Weise verändert bzw. moduliert werden, wobei der Grad der Veränderung der optischen Eigenschaften als Anzeichen für eine Sitzbelegung oder eine Nicht-Sitzbelegung herangezogen werden kann.

Darüber hinaus kann vorliegend mittels des Lichtleiters, besonders einfach und betriebssicher festgestellt werden, ob eine Einrichtung zum Erkennen einer personenbedingten Sitzbelegung defekt ist oder nicht. Ein solcher Defekt kann beispielsweise auf Grund einer gebrochenen Leitung zum Leiten von elektromagnetischen Wellen einer entsprechenden Erkennungseinrichtung vorliegen. Werden jedoch, wie vorliegend vorgesehen, optische Mittel zum Erkennen einer Sitzbelegung, wie beispielsweise ein deformierbarer Lichtleiter, eingesetzt, kann vorteilhafter Weise unmittelbar ermittelt werden, ob ein derartiger deformierbarer Lichtleiter gebrochen ist oder nicht. Im Falle eines Bruchs kann kein Licht mehr durch den Lichtleiter hindurch geleitet und demzufolge am Ausgang des Lichtleiters auch nicht detektiert werden. Ist der deformierbare Lichtleiter jedoch nicht gebrochen, sondern nur gebogen oder geknickt, gelangt zumindest immer noch eine Restlichtmenge bis an den Ausgang des deformierbaren Lichtleiters. Sobald eine derartige Restlichtmenge ausgangsseitig detektiert werden kann, kann davon ausgegangen werden, dass die Mittel zum optischen Erkennen einer Sitzbelegung intakt sind. Dies ist ein wesentlicher Vorteil gegenüber aus dem Stand der Technik bekannten herkömmlichen Methoden. Insofern können die vorliegenden Lichtleiter auch als Mittel zum Prüfen einer Erkennungseinrichtung für eine personenbezogene Sitzbelegung herangezogen werden.

Idealerweise weist der deformierbare Lichtleiter eine oder mehrere optische Fasern als Kernelemente auf, mittels welchen elektromagnetische Wellen, vorzugsweise sichtbares Licht, durch den deformierbaren Lichtleiter hindurch geleitet werden können. Bei einem derartigen Kernelement kann es sich beispielsweise um eine Stufenindexfaser handeln, welche besonders preiswert ist.

Beispielsweise ist ein Kernelement eines solchen Lichtleiters von einer das Kernelement umhüllenden Hülle beabstandet, wobei das entstehende Volumen zum Beispiel unter Vakuum steht, mit einem Schutzgas, bevorzugt Stickstoff oder Argon, beaufschlagt ist, um die Materialbeanspruchung durch reaktive Sauerstoffmoleküle zu minimieren, oder mit Luft befüllt ist. Ein eingangsseitig des deformierbaren Lichtleiters eingekoppeltes Licht gelangt innerhalb des Kernelementes des Lichtleiters idealerweise nach dem Prinzip einer Totalreflexion etwa bis an einen Ausgang des Kernelementes des deformierbaren Lichtleiters, an welchem es detektiert werden kann. Bei ausreichend starker Deformierung des Lichtleiters durch eine personenbezogene Sitzbelegung, beispielsweise durch Verbiegen, wird ein erforderlicher Grenzwinkel für diese Totalreflexion kritisch unterschritten, und zumindest ein Teil des Lichts innerhalb des deformierbaren Lichtleiters nicht derart reflektiert, dass es bis an den Ausgang des deformierbaren Lichtleiters gelangen kann. Unterschreitet das detektierbare Licht einen vorbestimmten Schwellenwert, kann vorteilhafterweise auf eine Sitzbelegung durch eine Person geschlossen werden. Hiermit können die optischen Erkennungsmittel konstruktiv besonders einfach bereitgestellt werden.

Wird ferner durch eine personenbezogene Sitzbelegung der deformierbare Lichtleiter ausreichend stark deformiert, wird unter physikalischer Veränderung, erfindungsgemäß durch mechanische Betätigungsmittel, der Umgebung auch der Abstand zwischen Hülle und Kernelement kontinuierlich reduziert bis letztlich ein direkter Kontakt entsteht. Dieser Kontakt bedingt eine Absorption der Energie des reflektierten Lichtes unter Reduzierung der Signalintensität am Ausgang des Lichtleiters. Eine solche Absorption kann insbesondere dadurch erfolgen, dass im Falle der Totalreflexion an der Grenzfläche des Kernelementes, hinter dieser Grenzfläche ein elektromagnetisches Nahfeld ausgebildet wird. Bei Deformation des Lichtleiters kommt es zu einer Überschneidung dieses Nahfeldes mit den Molekülen der Hülle, die dann zu Streuzentren für das bis dahin statische Nahfeld werden und dementsprechend Energie absorbieren können, welche dem Licht im Kernelement dauerhaft entzogen wird.

Unterschreitet das detektierbare Licht einen vorbestimmten Schwellenwert, so kann vorteilhafterweise auf eine Sitzbelegung durch eine Person geschlossen werden. Dieser vorbestimmte Schwellenwert des detektierbaren Lichtes kann beispielsweise so gewählt werden, dass dieser mit einem entsprechenden Gewicht einer Person, die auf dem Sitz Platz genommen hat, gekoppelt ist. Sitzt zum Beispiel ein Kind mit 30 kg Körpergewicht auf dem Fahrersitz, wird die Intensität des detektierten Lichtes abgeschwächt im Vergleich zu einem unbelasteten Sitz sein, aber dennoch höher, als wenn eine erwachsene Person Platz genommen hätte. Wird der vorbestimmte Schwellenwert nicht unterschritten, kann auch die gesamte Bordelektronik gesperrt bleiben, d.h., das Kind kann den Wagen nicht starten. Ferner ist auch denkbar, dass es bevorzugt eine Zeitabhängigkeit der Unterschreitung des vorbestimmten Schwellenwertes gibt. So ist es zur Aktivierung der Bordelektronik erforderlich, dass das Licht den vorbestimmten Schwellenwert über ein längeres Zeitintervall konstant unterschreitet. Dies sichert, dass nicht auch ein spielendes Kind, welches auf dem Sitz hüpft, versehentlich den Wagen starten kann.

Darüber hinaus ist es auch möglich, dass eine derartige optische Faser innerhalb einer flexiblen Hülle eines deformierbaren Lichtleiters derart eingebettet ist, dass die optische Faser im Normalzustand, also in einem unbelegten Zustand eines Sitzteils, nur an wenigen Stützstellen mit der flexiblen Hülle in Kontakt steht. Hierbei kann ein eingangsseitig des deformierbaren Lichtleiters eingekoppeltes Licht nahezu zur Gänze ausgangsseitig des deformierbaren Lichtleiters detektiert werden. Wird jedoch der deformierbare Lichtleiter durch eine Person auf dem Sitzteil deformiert, so kann die optische Faser an vielen Kontaktstellen bzw. großflächiger mit der flexiblen Hülle in Kontakt treten, wodurch das eingangsseitig eingekoppelte Licht innerhalb des deformierbaren, wenigstens eine optische Faser aufweisenden Lichtleiters aus der optischen Faser ausgekoppelt werden kann. Insofern kann ausgangsseitig des deformierbaren Lichtleiters das zuvor eingekoppelte Licht eben nicht mehr zur Gänze sondern nur noch gedämpft detektiert werden. Ein derart ausgangsseitig detektiertes gedämpftes Licht kann vorteilhafterweise als Maß für die auf einem Sitzteil wirkende Last herangezogen werden. Insofern kann hierdurch eine Sitzbelegung zuverlässig erkannt werden.

Eine Auskopplung des Lichtes aus dem Kernelement wird vorzugsweise dann erreicht, wenn die den Lichtleiter durchlaufenden Lichtstrahlen mit einem kleineren Winkel als dem Grenzwinkel der Totalreflexion auf einen Mediumsübergang bzw. auf Grenzflächen zwischen zwei Medien treffen. Hierbei gibt es die drei Grenzflächen-Situationen Faser → Luft, Faser → Faserhülle und Faser → Fasermantel.

Für jeden dieser beschriebenen Grenzflächenübergänge besteht jeweils ein individueller Grenzwinkel der Totalreflexion, welcher vorrangig von den optischen Brechzahlen der an den Grenzflächen angrenzenden unterschiedlichen Medien, insbesondere beim Übergang von einem optisch dichteren zu einem optisch dünneren Medium, abhängen.

Eine derartige Auskopplung bei einem kleineren Winkel als dem Grenzwinkel der Totalreflexion kann vorteilhaft dann genutzt werden, wenn es schwierig ist, eine optische Faser in der Sitzfläche zu verlegen, ohne das diese bereits in einem Zustand der Nichtbelegung der Sitzfläche ihre Faserhülle berührt.

Insofern wird die Aufgabe der Erfindung auch von einem Verfahren zum Erkennen einer Belegung eines Sitzes, insbesondere eines Fahrzeugsitzes oder eines Kraftfahrzeugsitzes, gelöst, bei welchem erkannt werden kann, ob eine Person auf einem Sitzteil des Sitzes Platz genommen hat, wobei eine personenbezogene Sitzbelegung mittels der o.g. , erfindungsgemäßen Erkennungseinrichtung optisch erkannt wird, indem im Bereich des Sitzteils ein durch einen Lichtleiter hindurch geleitetes Licht moduliert wird.

Eine geeignete Modulation kann vorliegend vorteilhafterweise auch dadurch erzielt werden, dass beispielsweise Moden innerhalb des vorstehend bereits beschriebenen deformierbaren Lichtleiters derart gestreut werden, dass diese ausgangsseitig nicht mehr hinsichtlich einer Hauptintensität des Lichtes beitragen können.

Neben einer Dispersion bzw. Pulsverbreiterung des durch den deformierbaren Lichtleiter hindurch geleiteten Lichtes kann am Ende des deformierbaren Lichtleiters somit gut ebenfalls eine noch erreichte Intensität des Lichtes als Indiz für eine Nichtbelegung eines Sitzes, eine Belegung des Sitzes durch eine Person und/oder einen Defekt des Lichtleiters sein.

Mittels einer solchen Modulation kann somit zuverlässig und vorteilhafterweise besonders schnell erkannt werden, ob eine Person auf dem Sitzteil des Sitzes Platz genommen hat.

Insbesondere wenn ein eingangsseitig eingekoppeltes Licht ausgangsseitig einen kritischen Schwellenwert unterschreitet, kann verfahrenstechnisch besonders einfach auf eine Sitzbelegung durch eine Person geschlossen werden.

Es kann des Weiteren bereits ausreichend für eine herausragende Erkennung sein, wenn etwa drei Erkennungsbereiche vorgesehen sind. Zum Beispiel wird ein erster Schwellenwert für eine Nichtbelegung des Sitzes festgelegt, etwa anhand hinsichtlich einer Minimalintensität einer Dispersion des Lichtes. Jenseits einer zuvor festgelegten Maximalintensität der Dispersion des Lichtes gilt der Sitz als durch eine Person belegt. Ein Defekt kann, wie vorstehend bereits beschrieben, leicht dadurch erkannt werden, dass kein Licht mehr detektiert werden kann.

Vorzugsweise werden die Mittel zum optischen Erkennen einer Sitzbelegung vor der Auslieferung initialisiert, sodass vorteilhafterweise ein individueller kritischer Schwellenwert bestimmt werden kann. Denn allein schon auf Grund einer kurvigen Verlegung des deformierbaren Lichtleiters an oder in dem Sitzteil, kann es eingangsseitig und ausgangsseitig des deformierbaren Lichtleiters zu Unterschieden hinsichtlich des durch den deformierbaren Lichtleiters geleiteten Lichtes kommen. Somit ist es vorteilhaft, wenn entsprechende Schwellenwerte hinsichtlich eines Fertigungsprozesses abschließend gemessen, abgeglichen und gespeichert werden, wenn eine Grundschwächung der durch einen Einbau, eine Verlegung und eine Vorbelastung des deformierbaren Lichtleiters bedingten Lichtintensität berücksichtigt werden soll.

Eine bevorzugte Verfahrensvariante sieht somit auch vor, dass das Licht in wenigstens eine optische Faser eines deformierbaren Lichtleiters des Sitzteils eingekoppelt wird, wobei im Falle einer Sitzbelegung ein Teil des eingekoppelten Lichtes innerhalb des deformierbaren Lichtleiters nicht ausreichend gut reflektiert bzw. aus der wenigstens einen optischen Faser ausgekoppelt wird. Wird zumindest ein Teil des eingekoppelten Lichtes innerhalb des deformierbaren Lichtleiters aus der wenigstens einen optischen Faser ausgekoppelt, so kann verfahrenstechnisch besonders einfach und zuverlässig eine entsprechende Sitzbelegung optisch erkannt werden.

Das am deformierbaren Lichtleiter eingangsseitig eingekoppelte Licht kann ausgangsseitig nur unzureichend detektiert werden, wenn beispielsweise ein Grenzwinkel für eine Totalreflexion innerhalb des deformierbaren Lichtleiters unterschritten wird. Nach dem Prinzip einer derartigen Totalreflexion kann vorliegend der Lichtleiter besonders vorteilhaft eingesetzt und betrieben werden.

In einer weiteren vorteilhaften Ausführungsform wird darüber hinaus außergewöhnlich sicher eine tatsächliche Sitzbelegung durch eine Person erkannt und gegebenenfalls auch von einer anderen Sitzbelegung, etwa die durch eine Tasche oder dergleichen, betriebssicher unterschieden. Hierbei ist es vorteilhaft, wenn zum teilweisen Auskoppeln des Lichtes aus der wenigstens einen optischen Faser der Lichtleiter mehrfach deformiert, vorzugsweise gebogen oder geknickt, wird. Insbesondere wenn der deformierbare Lichtleiter idealerweise mehrfach gebogen oder geknickt wird, kann eine tatsächliche Belegung des Sitzteils durch eine Person besonders zuverlässig erkannt werden. Speziell mittels eines mehrfachen Biegens oder Knickens des deformierbaren Lichtleiters kann garantiert werden, dass ein Grenzwinkel für eine Totalreflexion innerhalb des deformierbaren Lichtleiters, wie vorstehend bereits beschrieben, unterschritten wird und/oder die wenigstens eine optische Faser mehrfach und damit insgesamt auch ausreichend großflächig mit der flexiblen Hülle des deformierbaren Leiters in Kontakt steht und hierdurch das eingekoppelte Licht auch in einem ausreichend hohen Maß aus der wenigstens einen optischen Faser ausgekoppelt werden kann, sodass ausgangsseitig zuverlässig ein kritischer Schwellenwert unterschritten werden kann.

In diesem Zusammenhang sieht eine besonders vorteilhafte Verfahrensvariante vor, dass zum Erkennen der Sitzbelegung ein Differenzwert einer Lichtquantität und/oder einer Lichtqualität hinsichtlich eines Eingangs des deformierbaren Lichtleiters und eines Ausgangs des deformierbaren Lichtleiters ermittelt wird.

Beispielsweise kann eine Sitzbelegung durch eine Person vorteilhaft daran erkannt werden, dass ausgangsseitig des deformierbaren Lichtleiters nur noch ein Teil des eingangsseitig eingekoppelten Lichtes detektiert werden kann, wobei anhand der hierbei ermittelten Differenz hinsichtlich der Lichtquantität Rückschlüsse auf die Sitzbelegung gezogen werden können.

Kumulativ oder alternativ hierzu kann zur Sicherung einer zuverlässigen Erkennung einer entsprechenden Sitzbelegung ausgangsseitig auch die Lichtqualität ermittelt werden. Beispielsweise wird mittels geeigneter Deformationen des Lichtleiters ein bestimmtes Frequenz- bzw. Wellenlängenspektrum ausgekoppelt, sodass es ausgangsseitig des deformierbaren Lichtleiters nicht mehr detektiert werden kann.

Es versteht sich, dass die vorliegende Erkennungseinrichtung eine geeignete Einrichtung zum Ermitteln eines derartigen Differenzwertes und/oder zum Überwachen eines entsprechenden kritischen Schwellenwertes umfassen kann.

Ferner ist vorteilhaft, dass derartige Lichtleiter bevorzugt zumindest teilweise in Polstermaterialaussparungen an der Sitzunterseite des Sitzpolsters angeordnet sind. Dies ermöglicht zugleich eine entsprechende Verlegbarkeit des Lichtleiters, um auch die Punkte der Hauptbeanspruchung der Sitzfläche, bevorzugt der Seitenfläche des Sitzes, flexibel abzudecken. Um bei einer Sitzbelegung durch eine Person ausgangsseitig des deformierbaren Lichtleiters zuverlässig andere Werte bezüglich des eingangsseitig eingekoppelten Lichtes ermitteln zu können, ist es vorteilhaft, wenn die Erkennungseinrichtung zudem Mittel zum Modulieren einer optischen Leitfähigkeit des Lichtleiters umfasst.

In diesem Zusammenhang ist es vorteilhaft, wenn die Erkennungseinrichtung erfindungsgemäß Mittel zum mechanischen Betätigen des Lichtleiters, insbesondere Mittel zum Deformieren des Lichtleiters, umfasst. Derartige mechanische Betätigungsmittel und/oder Deformationsmittel können vorteilhafterweise baulich einfach eine Deformation bzw. Biegung oder Knickung des deformierbaren Lichtleiters unterstützen bzw. verstärken. Insofern können hierdurch selbst leichtere Personen auf dem Sitzteil des Sitzes erkannt werden.

Eine bevorzugte Ausführungsvariante sieht vor, dass die mechanischen Betätigungsmittel und/oder die Deformationsmittel bevorzugt Erhebungen aufweisen, welche dem Lichtleiter zugewandt sind. Beispielsweise können deformierbare Lichtleiter mittels der Erhebungen hinreichend gut gebogen werden, indem der deformierbare Lichtleiter durch das Sitzpolster bei einer Sitzbelegung den Lichtleiter gegen die Mittel zur mechanischen Betätigung führt oder indem der deformierbare Lichtleiter in zwischen den Erhebungen vorhandene Senken hinein gedrückt wird. Insbesondere kann mittels der Erhebungen eine lokal begrenzte Deformation erzielt werden, wodurch die Genauigkeit der Sitzbelegungserkennung weiter verbessert werden kann.

Darüber hinaus wird zumindest ein Lichtleiter bevorzugt zumindest teilweise mit Halteeinrichtungen, mit insbesondere rahmenartigen und/oder leistenartigen Systemen zur Aufnahme des Lichtleiters, angeordnet. Diese Halteeinrichtungen sind bevorzugt aus Kunststoff und/oder Metall und dienen der zusätzlichen Stabilisierung des optischen Elementes gegenüber Verdrillung, Delokalisierung und mechanischer Beschädigung. So kann trotz häufiger Benutzung des Sitzes auch über lange Zeit eine konstant hohe qualitative Erkennung zur Sitzbelegung erfolgen. Rahmenartige Systeme können vorteilhaft rund oder auch eckig, bevorzugt quadratisch, ausgebildet sein, wobei deren geometrische Ausgestaltung bevorzugt auf der geometrischen Beschaffenheit des Lichtleiters basiert. Ferner ist denkbar, dass diese rahmenartigen Systeme den Lichtleiter nahezu vollständig umschließen und nur an besonderen Hauptbelastungspunkten des Sitzes Aussparungen an der Oberfläche aufweisen, welche zur Sitzoberseite gerichtet ist. Diese Aussparungen können sowohl rund als auch eckig ausgebildet sein. Passgenau zu diesen Aussparungen sind an der gegenüberliegenden Innenseite des rahmenartigen Systems Erhebungen lokalisiert, um bei Sitzbelegung Teile des dazwischen liegenden Lichtleiters zu deformieren. Durch die Aussparungen des rahmenartigen Systems erfolgt die Deformation des Lichtleiters punktuell, ohne dass der gesamte Lichtleiter deformiert wird. Darüber hinaus können auch schienenartige Systeme als Halteeinrichtungen verwendet werden, wobei die Schienen hier bevorzugt als Führungsschienen ausgebildet sind, welche den Lichtleiter zumindest an einer Seite führen. Eine Befestigung kann beispielsweise durch Einschieben des Lichtleiters in die Schienen erfolgen, wobei die dem Lichtleiter zugewandte Innenseite des schienenartigen Systems über mechanische Betätigungsmittel verfügt, die im Falle einer Deformierung bei Sitzbelegung den Lichtleiter deformieren und ein Lichtaustritt aus dem Lichtleiter erfolgt, was zu einer Reduzierung des Signals bedingt. Bevorzugt sind die Halteeinrichtungen in Aussparungen des Sitzpolsters lokalisiert und/oder zwischen der Unterseite des Sitzpolsters und des Bodenbleches angeordnet.

Geeignete mechanische Betätigungsmittel bzw. geeignete Deformationsmittel können in unterschiedlichsten Ausführungsgestalten bereitgestellt werden. Ein konstruktiv einfacher Aufbau im Hinblick auf einen herkömmlichen Sitz kann vorliegend weitestgehend beibehalten, wenn die mechanischen Betätigungsmittel und/oder die Deformationsmittel von einem Bodenblech des Sitzteils ausgestaltet sind.

Dementsprechend sieht eine diesbezüglich einfach gestaltete Ausführungsvariante vor, dass eine Schaltleiste zum Schalten des Lichtleiters von einer wellenförmig gestalteten Blechschale bzw. von einem wellenförmig gestalteten Bodenblech des Sitzteils ausgestaltet ist. Hierbei braucht die Bodenschale bzw. das Bodenblech nur wellenförmig ausgestaltet werden. Mittels der Gestalt der Wellenform kann die Sensibilität der vorliegenden Erkennungseinrichtung eingestellt werden.

Sind die Lichtleiter zwischen einem Bodenblech des Sitzteils und einer Sitzteiloberfläche angeordnet, so kann beispielsweise ein deformierbarer Lichtleiter problemlos gegen ein geeignet ausgeformtes Bodenblech gedrückt und hierbei gebogen werden, wenn auf der Sitzteiloberfläche eine Person Platz genommen hat.

Auch die Lichtleiter lassen sich vorteilhaft in einem Sitz integrieren, wenn die Lichtleiter zumindest teilweise innerhalb eines Sitzpolsters des Sitzteils angeordnet sind. Hierbei kann speziell ein deformierbarer Lichtleiter, beispielsweise als Schlaufe, durch das Sitzpolster hindurchgeführt sein.

Hinsichtlich einer anderen Konstruktion kann ein deformierbare Lichtleiter auch unterhalb eines Sitzpolsters und damit zwischen dem Sitzpolster eines Sitzteils und einem Bodenblech des Sitzteils angeordnet sein.

Ein Verlegen des deformierbaren Lichtleiters kann jedoch vorteilhafter innerhalb des Sitzpolsters erfolgen, da der deformierbare Lichtleiter innerhalb des Sitzpolsters wesentlich besser vor mechanischen Beschädigungen gestützt ist.

Um insbesondere einen deformierbaren Lichtleiter bereits mittels eines geringen Kraftaufwands umbiegen bzw. knicken zu können, ist es vorteilhaft, wenn das Sitzteil ein Sitzpolster umfasst, wobei das Sitzpolster Polstermaterialaussparungen aufweist, in welchen Erhebungen von mechanischen Betätigungsmitteln und/oder von Deformationsmitteln für die Lichtleiter angeordnet sind.

Um einerseits Licht eingangsseitig des deformierbaren Lichtleiters einkoppeln und andererseits ausgangsseitig des deformierbaren Lichtleiters ermitteln zu können, ist es vorteilhaft, wenn die Erkennungseinrichtung eine Sende- und/oder Empfangseinrichtung umfasst, wobei insbesondere die Sendeeinrichtung einen Lichtemitter und die Empfangseinrichtung einen Lichtdetektor aufweist. Eine derartige Sende- und/oder Empfangseinrichtung kann auch losgelöst von einer Erkennungseinrichtung des vorliegenden Sitzes als eigenständiges Bauteil vorgesehen sein, wobei dann der vorliegende Lichtleiter in geeigneter Weise bis zu einer derartigen eigenständigen Sende- und/oder Empfangseinrichtung verlegt sein muss.

Weitere Vorteile, Ziele und Eigenschaften vorliegender Erfindung werden anhand nachfolgender Beschreibung anliegender Zeichnung erläutert, in welcher beispielhaft ein Kraftfahrzeugsitz mit Mitteln zum optischen Erkennen einer Sitzbelegung dargestellt ist.

### Es zeigen:

- Figur 1: schematisch eine perspektivische Ansicht eines Kraftfahrzeugsitzes mit einem Sitzteil, mit einer Rückenlehne und mit einer dem Sitzteil zugeordneten Erkennungseinrichtung, die Mittel zum optischen Erkennen einer personenbezogenen Sitzbelegung umfasst;
- Figur 2: schematisch eine teilweise geschnittene Aufsicht eines Sitzpolsters des Sitzteils aus der Figur 1, wobei innerhalb des Sitzpolsters die Lichtleiter integriert sind;
- Figur 3a und 3b: schematische Seitenansicht eines Lichtleiters mit Kernelement und Hülle;
- Figur 4: schematisch eine teilweise geschnittene Ansicht des Sitzpolsters aus der Figur 2;
- Figur 5: schematisch eine teilweise geschnittene Ansicht des durch eine Person belasteten Sitzpolsters aus den Figuren 2 und 4;
- Figur 6: schematisch eine Ansicht einer Unterseite eines weiteren Sitzpolsters mit einer möglichen Anordnung eines deformierbaren Lichtleiters und mit einer möglichen Anordnung von Kontaktzugangsbereichen für einen erleichterten Zugang zu dem deformierbaren Lichtleiter;
- Figur 7: schematisch eine deformierbare Lichtleiterschlaufe mit einer Sende- und Empfangseinrichtung für Licht; und
- Figur 8: schematisch eine Unteransicht eines anderen Sitzpolsters mit einem integrierten deformierbaren Lichtleiter

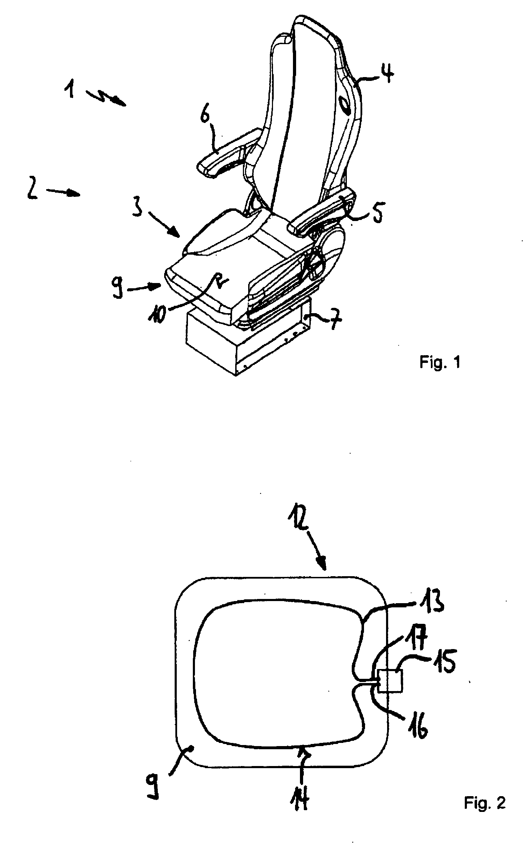

Bei dem in der Figur 1 gezeigten Sitz 1 handelt es sich um einen Kraftfahrzeugsitz 2, wie er speziell in Nutzkraftfahrzeugen (hier nicht gezeigt) eingesetzt werden kann.

Der Sitz 1 weist ein Sitzteil 3, eine daran sich anschließende Rückenlehne 4 sowie zwei Armlehnen 5 und 6 auf. Der Sitz 1 ist an einem Tragegestell 7 montiert, welches mit einem Fahrgastzellenboden (hier nicht gezeigt) fest verbunden werden kann.

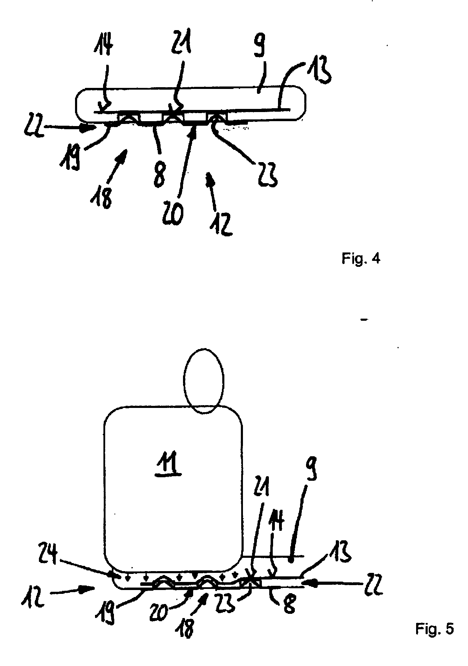

Wie speziell aus den Darstellungen der Figuren 4 und 5 gut ersichtlich ist, umfasst das Sitzteil 3 ein Bodenblech 8, an welchem ein Sitzpolster 9 appliziert ist. Mittels des Sitzteils 3 bzw. des Sitzpolsters 9 wird eine bequeme Sitzoberfläche 10 ausgebildet, auf welche eine Person 11, beispielsweise ein Fahrer des hier nicht gezeigten Nutzkraftfahrzeugs, Platz nehmen kann.

Um nun automatisch erkennen zu können, ob die Person 11 tatsächlich auf dem Sitzteil 3 des Sitzes 1 Platz genommen hat und somit der Sitz 1 auch personenbezogen belegt ist, verfügt der Sitz 1 des Weiteren über eine Einrichtung 12 zum Erkennen der personenbezogenen Sitzbelegung.

Wie weiter anhand der Darstellungen der Figuren 2 bis 5 gut zu sehen ist, umfasst die Erkennungseinrichtung 12 erfindungsgemäß Mittel 13 zum optischen Erkennen einer personenbezogenen Sitzbelegung, welche in diesem Ausführungsbeispiel als deformierbarer Lichtleiter 14 ausgestaltet sind. Speziell mittels des deformierbaren Lichtleiters 14 gelingt es konstruktiv einfach und extrem betriebssicher zu erkennen, ob einerseits eine Sitzbelegung vorliegt, nämlich dadurch, dass dann der deformierbare Lichtleiter 14 durch die Last der Person 11 deformiert wird, wodurch das durch den deformierbaren Lichtleiter 14 geleitete Licht auf seinem Weg durch den deformierbaren Lichtleiter 14, vorteilhafterweise insbesondere gemäß dem Prinzip einer Grenzwinkelunterschreitung einer Totalreflexion oder auch insbesondere durch Absorption, entsprechend verändert wird. Oder aber, ob andererseits ein Bruch des deformierbaren Lichtleiters 14 vorliegt, wobei in diesem Fall der Lichtfluss durch den deformierbaren Lichtleiter 14 vollständig unterbrochen ist.

Zum Erzeugen und Detektieren des für den deformierbaren Lichtleiter 14 erforderlichen Lichtes ist die Erkennungseinrichtung 12 des Weiteren mit einer Sende- und Empfangseinrichtung 15 ausgerüstet. Mittels einer Sendeeinheit der Sende- und Empfangseinrichtung 15 wird das Licht in einen Eingang 16 des deformierbaren Lichtleiters 14 emittiert und mittels einer Empfangseinheit der Sende- und Empfangseinrichtung 15 wird das durch den deformierbaren Lichtleiter 14 geleitete Licht an einem Ausgang 17 des deformierbaren Lichtleiters 14 detektiert. Zumindest bei einer personenbezogenen Sitzbelegung kann sich das Licht am Eingang 16 und am Ausgang 17 auf Grund einer Deformation des Lichtleiters 14 hinsichtlich seiner Lichtquantität und/oder seiner Lichtqualität unterscheiden, wodurch von der Sende- und Empfangseinrichtung 15 beispielsweise einer nachgeschalteten Auswerteeinrichtung (hier nicht dargestellt) entsprechende elektrische Signale übermittelt werden können.

Damit der deformierbare Lichtleiter 14 entsprechend deformiert und die Leitfähigkeit des deformierbaren Lichtleiters 14 hierdurch verändert werden kann, verfügt die Erkennungseinrichtung 12 noch über Mittel 18 zum Modulieren einer optischen Leitfähigkeit des Lichtleiters 14.

Zwar kann eine ausreichend gute Deformation des deformierbaren Lichtleiters 14 allein schon dadurch erzielt werden, dass sich das Sitzpolster 9 des Sitzteils 3 auf Grund einer Last durch die Person 11 bereits hinreichend stark verformt. Dies bedingt eine Annäherung von Hülle und Kern, was bevorzugt zu einer Absorption der Energie des reflektierten Lichtes unter gleichzeitigem Intensitätsverlust führt. In diesem Fall kann das Sitzpolster 9 die Modulierungsmittel 18 bilden. Dies kann insbesondere dann zutreffen, wenn der deformierbare Lichtleiter 14 innerhalb des Sitzpolsters 9 eingelassen ist, wie es in diesem Ausführungsbeispiel gezeigt ist.

Um den deformierbaren Lichtleiter 14 jedoch hinsichtlich einer personenbezogenen Sitzbelegung stets besonders betriebssicher deformieren zu können, ist die Erkennungseinrichtung 12 zusätzlich erfindungsgemäß noch mit Mitteln 19 zum mechanischen Betätigen des Lichtleiters 14 ausgestattet, wobei die mechanischen Betätigungsmittel 19 hierbei auch als Mittel zum Deformieren des Lichtleiters 14 angesehen werden können.

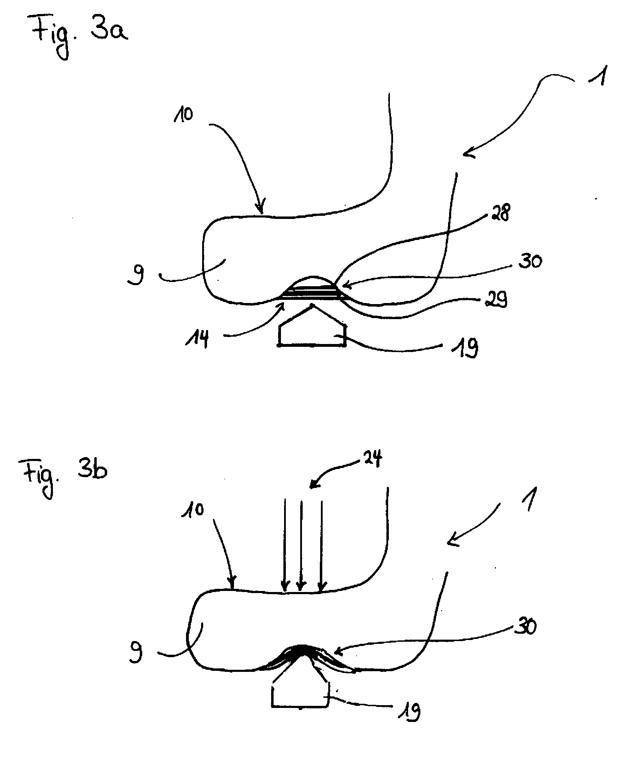

Fig. 3a zeigt eine Seitenansicht eines Sitzes 1 mit einem Sitzpolster 9 und einem Lichtleiter 14 mit Kernelement 29 und einer das Kernelement 29 umgebenden Hülle 28. Gegenüber der Polstermaterialaussparung 30 ist ein mechanisches Betätigungsmittel 19 angeordnet, welches sowohl stationär aber auch bewegbar ausgebildet ist und zum Lichtleiter 14 beabstandet ist. Fig. 3b zeigt eine Seitenansicht des Sitzes aus Fig. 3a für den Fall einer Deformierung des Lichtleiters 14 durch eine Sitzbelegung, welche in Richtung der Lastpfeile 24 erfolgt, wobei der gesamte Lichtleiter 14 durch die Sitzbelegung gegen das mechanische Betätigungsmittel 19 geführt wird, welches sich zu diesem Zeitpunkt beispielsweise in Ruhe befindet. Kernelement 29 und Hülle 28 werden hierbei bevorzugt derart deformiert, dass sich der Abstand zwischen Kernelement 29 und Hülle 28 soweit verringert, bis diese in direktem Kontakt stehen. Dies bedingt eine Absorption der Energie des Lichtes im Kernelement 29, was zu einer Signalreduzierung am Ausgang 17 des Lichtleiters 14 führt. So erfolgt verlässlich Auskunft über die Sitzbelegung. Ferner können mechanische Betätigungsmittel 19 bei einem vorteilhaften Ausführungsbeispiel konstruktiv besonders einfach mittels eines wellenförmig gestalteten Bodenblechs 20 realisiert werden, sodass vorteilhafter Weise ein bestehendes Bauteil des Sitzes 1 hierfür verwendet werden kann.

Das wellenförmig gestaltete Bodenblech 20 bildet hierbei Erhebungen 21 aus, welche dem Lichtleiter 14 zugewandt sind. Somit steht sogleich sehr platzsparend eine Schaltleiste 22 zum Schalten des deformierbaren Lichtleiters 14 an dem Sitzteil 3 des Sitzes 1 zur Verfügung.

Die Erhebungen 21 sind in diesem Ausführungsbeispiel im Bereich von Polstermaterialaussparungen 23 angeordnet, sodass die Erhebungen 21 besonders gut mit dem deformierbaren Lichtleiter 14 in Wirkkontakt treten können. Insofern kann der deformierbare Lichtleiter 14 zumindest partiell mehrfach deformiert bzw. um die vorgesehenen Erhebungen 21 herum gebogen werden, wenn die Person 11 insbesondere das Sitzpolster 9 gemäß der Lastpfeile 24 belastet, wodurch sich die Leitfähigkeit des deformierbaren Lichtleiters 14, insbesondere die Leitfähigkeit wenigstens einer optischen Faser (hier nicht dargestellt) des deformierbaren Lichtleiters 14 verändern kann.

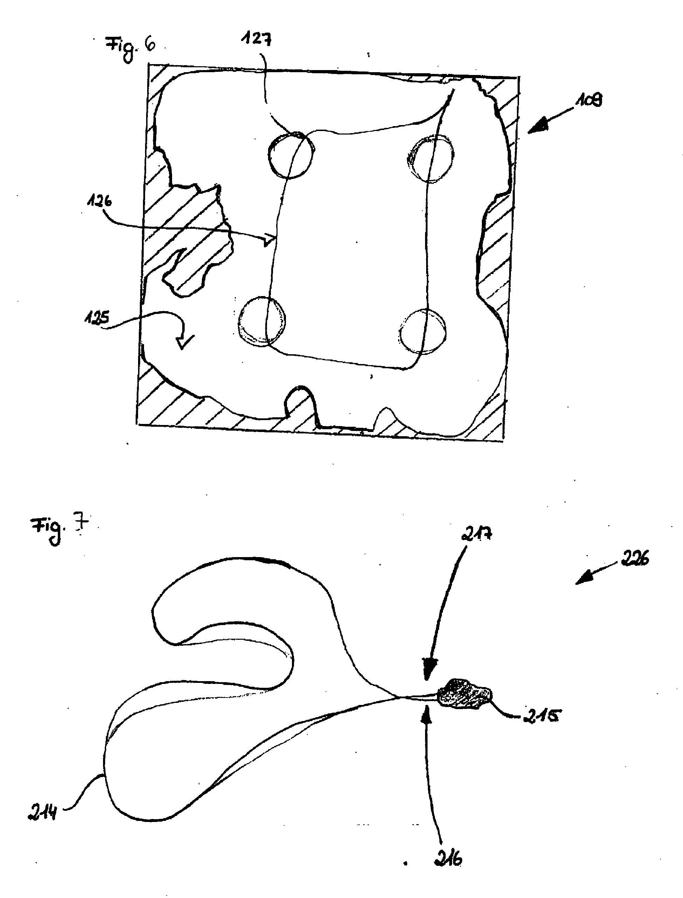

Nach der Darstellung gemäß der Figur 6 ist eine Unterseite 125 eines anderen Sitzpolsters 109 offenbart, an welcher schematisch eine mögliche Verlegung einer deformierbaren Lichtleiterschlaufe 126 angedeutet ist. Hierbei können an vier schemenhaft hervorgehobenen Wirkbereichen 127 (nur exemplarisch beziffert) entsprechende Polstermaterialaussparungen 23 (siehe Figuren 3 und 4) vorgesehen sein, um eine personenbezogene Deformation der deformierbaren Lichtleiterschlaufe 126 zu begünstigen.

Eine gattungsgemäße deformierbare Lichtleiterschlaufe 226 ist mittels der Figur 7 dargestellt. Die deformierbare Lichtleiterschlaufe 226 stellt eine Lichtleiterlänge von ca. 2 m bereit, wobei ein Eingang 216 und ein Ausgang 217 des deformierbaren Lichtleiters 214 in eine Sende- und Empfangseinrichtung 215 münden und dort entsprechend angeschlossen sind. Auf Grund der kurzen Lichtleiterlänge von ca. 2 m kann als optische Faser (nicht gezeigt) problemlos eine kostengünstige Stufenindexfaser verwendet werden.

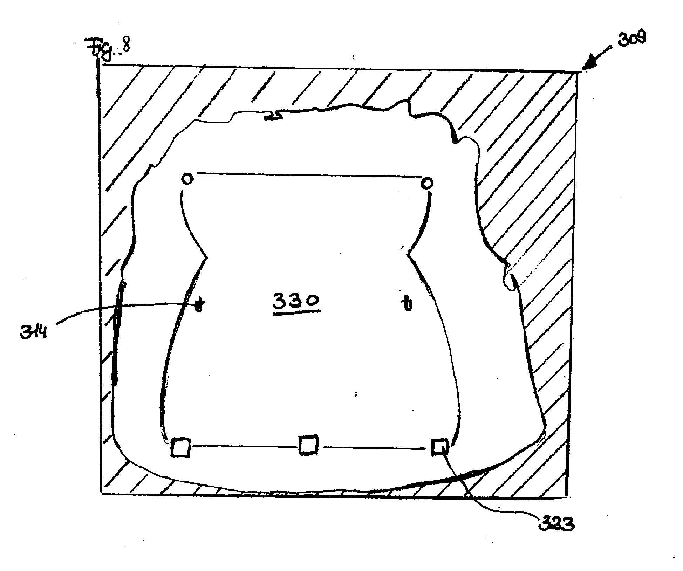

Bei dem in der Figur 8 gezeigten Sitzpolster 309 ist ein deformierbarer Lichtleiter 314 bereits mäanderförmig in das Sitzpolster 309 eingearbeitet und der deformierbare Lichtleiter 314 ist im Wesentlichen nur noch an Polstermaterialaussparungen 323 direkt von außen erkennbar. Insofern kann der deformierbare Lichtleiter 314 im Bereich der Polstermaterialaussparungen 323 besonders gut deformiert werden. Gut erkennbar ist an dem Sitzpolster 309 auch noch eine Ausformung 330, in welche hinein ein korrespondierendes Bodenblech eines Sitzes eingelegt werden kann. Hierbei können dann Erhebungen des Bodenblechs unmittelbar bis an den deformierbaren Lichtleiter 314 heran reichen, wodurch eine mehrfache Deformation des Lichtleiters 314 begünstigt werden kann, wie vorstehend bereits beschrieben ist.

Abwandlungen des Grundgedankens dieser Erfindung sind grundsätzlich denkbar. Beispielsweise kann anstelle eines deformierbaren Lichtleiters eine so genannte Schaltleiste oder Mehrzahl an Schaltleisten verwendet werden. Derartige Schaltleisten sind länglich ausgebildet und weisen in ihrem Inneren eine in ihrem Profil integrierte Schaltkammer auf. Hierbei sind zwei voneinander getrennte, leitfähige Bereiche, die streifenartig übereinander angeordnet sein können, derart angeordnet, dass bereits bei geringem Druck bzw. bei geringer Deformierung der Schaltleiste die leitfähigen Bereiche miteinander in Kontakt kommen und hierdurch kurzgeschlossen werden. Hierdurch entsteht ein Signal für eine angeschlossene Auswerteeinrichtung.

Derartige Schaltleisten können ebenso wie Lichtleiter im Schaummaterial einer Sitzfläche eines Fahrzeugsitzes verlegt werden und durchaus Prägungen im Blechbereich der Sitzfläche an gezielten Stellen deformiert bzw. der elektrische Kontakt an diesen Stellen geschlossen werden. Eine derartige Kontaktierung bzw. ein Kurzschluss innerhalb der Schaltleiste könnte dann durch eine Belegung der Sitzfläche stattfinden.

Die derartigen Schaltleisten arbeiten elektrisch betrachtet nach dem Ruhestromprinzip, d. h. ein Kabelbruch wird erkannt und die gefahrbringende Bewegung wird gestoppt. Üblicherweise arbeiten derartige Schaltleisten mit einer Spannung bis zu max. 24V DZ und einer Stromstärke von max. 10 mA. Sie bestehen außenseitig aus einem thermoplastischem Elastomer mit einem TPE-Mantel mit kundenspezifischer Formgebung.

Ein Ansprechwinkel auf Belastungen und damit Herbeiführung eines Kurzschlusses kann bei mehr als 90° abhängig von der äußeren Profilform der Schaltleiste stattfinden. Die darauf einwirkende Betätigungskraft kann 25 N oder weniger betragen. Als Abschlusswiderstand wird beispielsweise 1,2 k Ω, und eine Leistung von max. 250 mW angewendet. Ein Kontakt-übergangswiderstand kann weniger als 400 Ω, betragen.

### Bezugszeichenliste

- 1: Sitz
- 2: Kraftfahrzeugsitz
- 3: Sitzteil
- 4: Rückenlehne
- 5: rechte Armlehne
- 6: linke Armlehne
- 7: Tragegestell
- 8: Bodenblech
- 9: Sitzpolster
- 10: Sitzoberfläche
- 11: Person
- 12: Erkennungseinrichtung
- 14: deformierbarer Lichtleiter
- 15: Sende- und Empfangseinrichtung
- 16: Eingang
- 17: Ausgang
- 18: Mittel zum Modulieren einer optischen Leitfähigkeit
- 19: Mittel zum mechanischen Betätigen
- 20: Bodenblech
- 21: Erhebungen
- 22: Schaltleiste
- 23: Polstermaterialaussparungen für Erhebungen
- 24: Lastpfeile
- 28: Hülle
- 29: Kernelement
- 30: Polstermaterialaussparungen für Lichtleiter
- 109: Sitzpolster
- 125: Unterseite
- 126: deformierbare Lichtleiterschlaufe
- 127: Wirkbereiche
- 215: Sende- und Empfangseinrichtung
- 216: Eingang
- 217: Ausgang
- 226: deformierbare Lichtleiterschlaufe
- 309: Sitzpolster
- 314: deformierbarer Lichtleiter
- 323: Polstermaterialaussparungen
- 330: Ausformung

## Patentansprüche

1. Erkennungseinrichtung (12) zum Erkennen einer Belegung eines Sitzes (1), insbesondere eines Fahrzeugsitzes oder Kraftfahrzeugsitzes (2), zumindest einen länglich ausgebildeten Lichtleiter (14) umfassend, welcher zumindest ein länglich ausgebildetes Kernelement (29) und zumindest eine zum Kernelement (29) beabstandete länglich ausgebildete Hülle (28) aufweist, wobei der Lichtleiter (14) durch mechanische Betätigungsmittel (19) in zumindest einer senkrecht zur Längsachse des Lichtleiters (14) verlaufenden Richtung deformierbar ist, indem die durch die Sitzbelegung verursachte Deformierung an der dem mechanischen Mittel (19) gegenüberliegenden Seite einen Austritt des Lichtes aus dem Lichtleiter (14) bedingt.

2. Erkennungseinrichtung nach einem der vorangegangenen Ansprüche,
**dadurch gekennzeichnet,dass**
der länglich ausgebildete Lichtleiter (14) zumindest teilweise in Polstermaterialaussparungen (30) für den Lichtleiter (14) des Sitzpolsters (9) angeordnet ist.

3. Erkennungseinrichtung (1) nach einem der vorangegangenen Ansprüche,
**dadurch gekennzeichnet, dass**
der länglich ausgebildete Lichtleiter (14) zumindest teilweise mit Hilfe von Halteinrichtungen, mit insbesondere rahmenartigen und/oder leistenartigen Systemen zur Aufnahme des Lichtleiters (14), angeordnet ist.

4. Erkennungseinrichtung nach einem der vorangegangenen Ansprüche ,
**dadurch gekennzeichnet,dass**
diese Mittel (18) zum Modulieren einer optischen Leitfähigkeit des Lichtleiters (14) umfasst.

5. Erkennungseinrichtung nach einem der vorangegangenen Ansprüche,
**dadurch gekennzeichnet,dass**
diese Mittel (19) zum mechanischen Betätigen des Lichtleiters (14), insbesondere Mittel zum Deformieren des Lichtleiters (14), umfasst.

6. Erkennungseinrichtung nach Anspruch 5,
**dadurch gekennzeichnet,dass**
die mechanischen Betätigungsmittel (19) Erhebungen (21) aufweisen, welche dem Lichtleiter (14) zugewandt sind.

7. Erkennungseinrichtung nach Anspruch 6,
**dadurch gekennzeichnet,dass**
das Sitzteil (3) ein Sitzpolster (9) umfasst, wobei das Sitzpolster (9) weitere Polstermaterialaussparungen (23) aufweist, in welchen Erhebungen (21) von mechanischen Betätigungsmitteln (19) und/oder von Deformationsmitteln für die optischen Erkennungsmittel (13) angeordnet sind.

8. Erkennungseinrichtung nach einem der Ansprüche 5 - 7,
**dadurch gekennzeichnet,dass**
die mechanischen Betätigungsmittel (19) von einem bevorzugt wellenförmigen Bodenblech (20) bzw. vorzugsweise von einer wellenförmig gestalteten Blechschale eines Sitzteils (3) ausgestaltet sind.

9. Erkennungseinrichtung nach einem der vorangegangenen Ansprüche"
**dadurch gekennzeichnet,dass**
zumindest ein Lichtleiter (14) zwischen einem Bodenblech (20) des Sitzteils (3) und einer Sitzteiloberfläche (10) angeordnet sind.

10. Erkennungseinrichtung nach einem der vorangegangenen Ansprüche"
**dadurch gekennzeichnet,dass**
diese eine Sende- und/oder Empfangseinrichtung (15) umfasst, wobei insbesondere die Sendeeinrichtung einen Lichtemitter und die Empfangseinrichtung einen Lichtdetektor aufweisen.

11. Verfahren zum Erkennen einer Belegung eines Sitzes (1), insbesondere eines Fahrzeugsitzes oder eines Kraftfahrzeugsitzes (2), bei welchem erkannt werden kann, ob eine Person (11) auf einem Sitzteil (3) des Sitzes (1) Platz genommen hat,
**dadurch gekennzeichnet, dass**
eine personenbezogene Sitzbelegung mittels einer Erkennungseinrichtung (1) gemäß zumindest einem der vorhergehenden Ansprüche optisch erkannt wird, indem im Bereich des Sitzteils (3) ein durch einen Lichtleiter (14) hindurch geleitetes Licht moduliert wird.

12. Verfahren nach Anspruch 11,
**dadurch gekennzeichnet,dass**
das Licht in den Lichtleiter (14) des Sitzteils (3) eingekoppelt wird, wobei im Falle einer Sitzbelegung ein Teil des eingekoppelten Lichtes innerhalb des deformierbaren, wenigstens eine optische Faser aufweisenden Lichtleiters (14) ausgekoppelt wird.

13. Verfahren nach Anspruch 12,
**dadurch gekennzeichnet, dass**
zum teilweisen Auskoppeln des Lichtes der deformierbare Lichtleiter (14) mehrfach deformiert, vorzugsweise gebogen oder geknickt, wird.

14. Verfahren nach einem der Ansprüche 12 bis 13,
**dadurch gekennzeichnet,dass**
zum Erkennen der Sitzbelegung ein Differenzwert einer Lichtquantität und/oder einer Lichtqualität hinsichtlich eines Eingangs (16) des deformierbaren Lichtleiters (14) und eines Ausgangs (17) des deformierbaren Lichtleiters (14) ermittelt wird.

## Claims

1. Detection device (12) for detecting occupancy of a seat (1), in particular of a vehicle seat or motor vehicle seat (2), comprising at least one elongate optical waveguide (14) having at least one elongate core element (29) and at least one elongate sheath (28) at a spacing from the core element (29), wherein the optical waveguide (14) is deformable by mechanical actuation means (19) in at least one direction extending perpendicular to the longitudinal axis of the optical waveguide (14), the deformation brought about by the seat being occupied causing the light to emerge from the optical waveguide (14) on the side opposite the mechanical means (19).

2. Detection device according to claim 1, **characterised in that** the elongate optical waveguide (14) is arranged at least in part in cushion material recesses (30) for the optical waveguide (14) of the seat cushion (9).

3. Detection device (1) according to either of the preceding claims, **characterised in that** the elongate optical waveguide (14) is arranged at least in part by means of holding devices having in particular frame-like and/or rail-like systems for receiving the optical waveguide (14).

4. Detection device according to any of the preceding claims, **characterised in that** said device comprises means (18) for modulating an optical conductivity of the optical waveguide (14).

5. Detection device according to any of the preceding claims, **characterised in that** said device comprises means (19) for mechanically actuating the optical waveguide (14), more particularly for deforming the optical waveguide (14).

6. Detection device according to claim 5, **characterised in that** the mechanical actuation means (19) have raised areas (21) which face the optical waveguide (14).

7. Detection device according to claim 6, **characterised in that** the seat part (3) comprises a seat cushion (9), the seat cushion (9) having additional cushion material recesses (23) in which raised areas (21) of mechanical actuation means (19) and/or of deformation means for the optical detection means (13) are arranged.

8. Detection device according to any of claims 5 to 7, **characterised in that** the mechanical actuation means (19) are formed from a preferably undulated base plate (20) or respectively preferably from an undulated plate shell of a seat part (3).

9. Detection device according to any of the preceding claims, **characterised in that** at least one optical waveguide (14) is arranged between a base plate (20) of the seat part (3) and a seat part surface (10).

10. Detection device according to any of the preceding claims, **characterised in that** said device comprises a transmitting and/or a receiving device (15), particularly the transmitting device having a light emitter and the receiving device having a light detector.

11. Method for detecting occupancy of a seat (1), in particular of a vehicle seat or motor vehicle seat (2), in which it can be detected whether a person (11) has sat down on a seat part (3) of the seat (1), **characterised in that** occupancy of a seat by a person can be optically detected by means of a detection device (1) according to at least one of the preceding claims by a light guided through an optical waveguide (14) being modulated in the seat part (3) region.

12. Method according to claim 11, **characterised in that** the light is coupled into the optical waveguide (14) of the seat part (3), a part of the coupled light being decoupled within the deformable optical waveguide (14), which has at least one optical fibre, in the event of a seat being occupied.

13. Method according to claim 12, **characterised in that** the deformable optical waveguide (14) is deformed many times, preferably curved or bent, for partially decoupling the light.

14. Method according to either claim 12 or claim 13, **characterised in that**, for detecting occupancy of a seat, a difference value of a light quantity and/or a light quality is determined with regard to an input (16) of the deformable optical waveguide (14) and an output (17) of the deformable optical waveguide (14).

## Revendications

1. Dispositif de détection (12) destiné à détecter l'occupation d'un siège (1), en particulier d'un siège de véhicule ou d'un siège de véhicule automobile (2), comprenant au moins un conduit de lumière (14) de forme oblongue, qui comporte au moins un élément central (29) de forme oblongue et au moins une gaine (28) de forme oblongue située à une certaine distance de l'élément central (29), le conduit de lumière (14) étant déformable par des moyens d'actionnement mécaniques (19) dans au moins une direction s'étendant perpendiculairement à l'axe longitudinal du conduit de lumière (14), la déformation causée par l'occupation du siège au niveau du côté opposé aux moyens mécaniques (19) provoquant une sortie de lumière hors du conduit de lumière (14).

2. Dispositif de détection selon la revendication 1, **caractérisé en ce que** le conduit de lumière (14) de forme oblongue est disposé au moins partiellement dans des évidements de matière de rembourrage (30) pour le conduit de lumière (14) du rembourrage des sièges (9).

3. Dispositif de détection (1) selon l'une quelconque des revendications précédentes, **caractérisé en ce que** le conduit de lumière (14) de forme oblongue est disposé au moins partiellement à l'aide de dispositifs de maintien, avec des systèmes présentant en particulier une forme de cadre et/ou de barre pour le logement du conduit de lumière (14).

4. Dispositif de détection selon l'une quelconque des revendications précédentes, **caractérisé en ce que** celui-ci comprend des moyens (18) pour moduler une conductivité optique du conduit de lumière (14).

5. Dispositif de détection selon l'une quelconque des revendications précédentes, **caractérisé en ce que** celui-ci comprend des moyens (19) pour l'actionnement mécanique du conduit de lumière (14), en particulier des moyens destinés à déformer le conduit de lumière (14).

6. Dispositif de détection selon la revendication 5, **caractérisé en ce que** les moyens d'actionnement mécaniques (19) comportent des bossages (21), qui sont orientés vers le conduit de lumière (14).

7. Dispositif de détection selon la revendication 6, **caractérisé en ce que** l'assise (3) comprend un rembourrage de siège (9), le rembourrage de siège (9) comporte d'autres évidements de matière de rembourrage (23) dans lesquels des bossages (21) de moyens d'actionnement mécaniques (19) et/ou de moyens de déformation sont disposés pour les moyens de détection optique (13).

8. Dispositif de détection selon l'une quelconque des revendications 5 à 7, **caractérisé en ce que** les moyens d'actionnement mécaniques (19) sont constitués de préférence d'une tôle de fond ondulée (20) ou respectivement de préférence d'une coque en tôle ondulée d'une assise (3).

9. Dispositif de détection selon l'une quelconque des revendications précédentes, **caractérisé en ce qu'**au moins un conduit de lumière (14) est disposé entre une tôle de fond (20) de l'assise (3) et une surface d'assise (10).

10. Dispositif de détection selon l'une quelconque des revendications précédentes, **caractérisé en ce que** celui-ci comporte un dispositif d'émission et/ou de réception (15), en particulier le dispositif d'émission comportant un émetteur de lumière et le dispositif de réception comportant un détecteur de lumière.

11. Procédé de détection de l'occupation d'un siège (1), en particulier d'un siège de véhicule ou d'un siège de véhicule automobile (2), dans lequel il est possible de détecter si une personne (11) a pris place sur une assise (3) du siège (1), **caractérisé en ce qu'**une occupation d'un siège par une personne est détectée optiquement au moyen d'un dispositif de détection (1) selon au moins l'une des revendications précédentes, en modulant la lumière guidée à travers un conduit de lumière (14) au niveau de l'assise (3).

12. Procédé selon la revendication 11, **caractérisé en ce que** la lumière est introduite dans le conduit de lumière (14) de l'assise (3), une partie de la lumière entrant à l'intérieur du conduit de lumière (14) déformable comportant au moins une fibre optique sort lorsque le siège est occupé.

13. Procédé selon la revendication 12, **caractérisé en ce que**, pour la sortie partielle de la lumière, le conduit de lumière déformable (14) est déformé, de préférence recourbé ou plié plusieurs fois.

14. Procédé selon l'une quelconque des revendications 12 à 13, **caractérisé en ce que**, pour la détection de l'occupation du siège, une valeur différentielle d'une quantité de lumière et/ou d'une qualité de lumière est déterminée pour une entrée (16) du conduit de lumière déformable (14) et une sortie (17) du conduit de lumière déformable (14).
